# EUROPÄISCHE PATENTSCHRIFT

(11) **EP 2 811 193 B1**
(45) Veröffentlichungstag und Bekanntmachung des Hinweises auf die Patenterteilung: **28.12.2016**
(21) Anmeldenummer: 14169515.5
(22) Anmeldetag: 22.05.2014
(51) Int. Cl.: F16D 1/06, F16H 57/00

(54) **Wellenanordnung für ein Getriebe**
Shaft assembly for a transmission
Structure d'arbre pour une boîte de vitesse

(30) Priorität: 07.06.2013 DE 102013105915
(43) Veröffentlichungstag der Anmeldung: 10.12.2014
(73) Patentinhaber: GETRAG Getriebe- und Zahnradfabrik Hermann Hagenmeyer GmbH & Cie KG, 74199 Untergruppenbach (DE)
(72) Erfinder: Knoll, Timo, 75438 Knittlingen (DE); Weller, Jens, 74199 Untergruppenbach (DE)
(74) Vertreter: Witte, Weller & Partner Patentanwälte mbB

(56) Entgegenhaltungen:
- WO-A1-01/48396
- DE-A1-102010 023 161
- US-A- 4 509 381
- US-A1- 2012 282 018

## Beschreibung

Die vorliegende Erfindung betrifft eine Wellenanordnung für ein Getriebe, mit einer Welle und mit einer an der Welle mittels einer Welle-Nabe-Verbindung festgelegten Festradanordnung, die ein Festrad und einen Hohlwellenabschnitt aufweist, wobei das Festrad eine erste axiale Seite, eine zweite axiale Seite sowie eine Verzahnung aufweist, wobei der Hohlwellenabschnitt die Welle umgibt und sich von der ersten axialen Seite des Festrades erstreckt. So eine Wellenanordnung ist aus der DE102010023161A bekannt.

Ferner betrifft die vorliegende Erfindung ein Fahrzeuggetriebe mit einer Welle und wenigstens einem daran festgelegten Festrad, das zur Einrichtung einer Gangstufe des Fahrzeuggetriebes mit einem Losrad in Eingriff steht, das an einer weiteren Welle drehbar gelagert ist.

Auf dem Gebiet der Fahrzeuggetriebe ist es bekannt, Gangstufen durch Radsätze einzurichten, die ein Losrad und ein Festrad aufweisen. Das Losrad ist hierbei mittels einer Schaltkupplung mit der zugeordneten Welle verbindbar oder hiervon trennbar, um die zugeordnete Gangstufe einzulegen oder auszulegen. Die Schaltkupplung kann eine Synchron-Schaltkupplung sein, insbesondere mit Sperrsynchronisierung.

Ein Fahrzeuggetriebe dieser Art weist in der Regel eine Mehrzahl von Gangstufen auf, die jeweils durch einen Radsatz gebildet sind. Dabei ist es auch bekannt, ein Festrad mit zwei Losrädern zu verbinden, so dass das Festrad zwei Gangstufen zugeordnet werden kann (so genannte Doppelnutzung).

An einer Welle eines solchen Fahrzeuggetriebes können dabei Festräder und Losräder benachbart zueinander angeordnet sein.

Zur festen Verbindung eines Festrades mit einer Welle sind verschiedene Arten von Welle-Nabe-Verbindungen bekannt. Zum einen ist es bekannt, ein einzelnes Festrad mittels zylindrischem Presssitz auf einen Wellenabschnitt aufzupressen. Alternativ ist es bekannt, am Innenumfang des Festrades und am Außenumfang eines Wellenabschnittes eine Steckverzahnung auszubilden, die flankenzentriert oder kopfzentriert sein kann. Schließlich ist es bekannt, ein Festrad an einen Wellenabschnitt zu schweißen, beispielsweise mittels Reifschweißen oder Laserschweißen. Bei manchen Welle-Nabe-Verbindungen ist eine axiale Sicherung erforderlich, um das Festrad in axialer Richtung an der Welle festzulegen. Der Fügebereich (Presssitz oder Steckverzahnung) erstreckt sich hierbei in der Regel über die gesamte axiale Länge des Festrades.

Die Welle-Nabe-Verbindungen sind auf diesem Gebiet vorzugsweise im Wesentlichen rotationssymmetrisch ausgebildet. Nicht-rotationssymmetrische Welle-Nabe-Verbindungen, beispielsweise mittels einer Passfeder, führen in der Regel zu lokalen Spannungsüberhöhungen, so dass die beteiligten Bauteile sehr massiv ausgebildet werden müssen.

Bei dem Aufpressen mittels zylindrischem Presssitz oder bei einer Steckverzahnung unter der Außenverzahnung des Festrades werden aufgrund hoher Pressüberdeckung häufig hohe Spannungen in die Außenverzahnung eingeleitet. Hierdurch kann die Lebensdauer der Wellenanordnung verringert werden. Zudem können angrenzende Verzahnungen, Lagerlaufbahnen oder Lager, die eine hohe Genauigkeit aufweisen müssen, verformt und/oder belastet werden.

Das Fertigen einer Steckverzahnung ist in der Regel deutlich kostenintensiver als das Fertigen einer zylindrischen Oberfläche mit ausreichender Güte zum Herstellen einer Presssitzverbindung.

Die Möglichkeit der Ausführung einer Welle-Nabe-Verbindung mittels Schweißen erfordert einen deutlich höheren Arbeits- und Kostenaufwand als das Fertigen einer zylindrischen Oberfläche mit ausreichender Güte und folgendem Aufpressvorgang in der Montage. Denn beim Schweißen sind gegebenenfalls zusätzliche Vorkehrungen bzw. Arbeitsschritte vorzusehen, beispielsweise das Glühen eines Rohlings, das Reinigen und Vorwärmen vor dem Schweißen, gegebenenfalls das Abdrehen einer Hartschicht, etc.

Vor diesem Hintergrund ist es eine Aufgabe der Erfindung, eine Wellenanordnung für ein Getriebe sowie ein hiermit ausgestattetes Fahrzeuggetriebe anzugeben, die ein möglichst robustes Design bei möglichst geringen Auswirkungen auf angrenzende Bauteile besitzt, wobei die Wellenanordnung kostengünstig zu fertigen ist.

Die obige Aufgabe wird bei der eingangs genannten Wellenanordnung mit den Merkmalen des Anspruchs 1 gelöst.

Unter einem Hauptverbindungsabschnitt wird vorliegend jener Abschnitt der Welle-Nabe-Verbindung verstanden, über den ein Drehmoment zwischen Welle und Festrad hauptsächlich übertragen wird. Durch die axiale Beabstandung des Hauptverbindungsabschnittes von der zweiten axialen Seite des Festrades und/oder von dem Hohlwellenende wird erreicht, dass dieser Hauptverbindungsabschnitt einen geringeren Einfluss auf benachbarte Bauteile hat. Hierdurch ist es möglich, auch solche Bauteile direkt benachbart zu der Festradanordnung an der Welle zu montieren, die mit hoher Präzision zu fertigen sind. Ferner hat die Maßnahme den Vorteil, dass gegebenenfalls auch der Einfluss der Welle-Nabe-Verbindung auf die Verzahnung des Festrades der Festradanordnung geringer ist, so dass die Lebensdauer erhöht werden kann.

Durch den axial von dem Festrad vorstehenden Hohlwellenabschnitt ergibt sich zudem eine relativ lange Einfädellänge zur Zentrierung der Festradanordnung bei der Montage an der Welle.

Insgesamt wird ein robustes Design bei möglichst geringen Auswirkungen auf angrenzende Bauteile (Lager, Verzahnungen etc.) geschaffen. Zudem kann der Hauptverbindungsabschnitt gegebenenfalls kostengünstig hergestellt werden, und zwar bei geringem Arbeitsaufwand. Der Hauptverbindungsabschnitt kann auf einer an sich bekannten Technologie basieren, die möglichst geringe Risiken bei der Fertigung, bei der Montage und im Betrieb beinhaltet.

Schließlich ist es gegebenenfalls möglich, relativ zu dem Durchmesser des Festrades einen relativ großen Fügedurchmesser des Hauptverbindungsabschnittes zu realisieren, so dass eine Festlegung der Festradanordnung an der Welle mit hoher Sicherheit realisiert werden kann. Der Hauptverbindungsabschnitt legt die Festradanordnung hierbei an der Welle in Umfangsrichtung fest, und vorzugsweise auch in axialer Richtung. Besonders bevorzugt ist es, wenn der Hauptverbindungsabschnitt dazu eingerichtet ist, Axial-, Radial- und Umfangskräfte übertragen zu können.

Die Aufgabe wird somit vollkommen gelöst.

Gemäß einer besonders bevorzugten Ausführungsform weist der Hohlwellenabschnitt ein von dem Festrad entferntes Hohlwellenende auf, wobei das Hohlwellenende am Außenumfang mit einem weiteren Festrad fest verbunden ist.

Hierbei beinhaltet die Festradanordnung folglich zwei Festräder, die über den Hohlwellenabschnitt miteinander verbunden sind.

Der Hauptverbindungsabschnitt liegt dabei in axialer Richtung vorzugsweise zwischen den zwei Festrädern.

Sofern eines der Festräder einen im Vergleich zum Welle-Nabe-Verbindungsdurchmesser relativ kleinen Außendurchmesser aufweist, ist der Hauptverbindungsabschnitt vorzugsweise um wenigstens die Hälfte der axialen Länge und insbesondere um wenigstens die gesamte axiale Länge des Festrades von der zweiten axialen Seite des Festrades und/oder von dem Hohlwellenende beabstandet. Sofern ein Festrad einen im Vergleich zum Welle-Nabe-Verbindungsdurchmesser relativ großen Durchmesser aufweist, kann sich der Hauptverbindungsabschnitt auch teilweise in axialer Richtung mit dem Festrad überdecken. Auch in diesem Fall ist es jedoch bevorzugt, wenn der Hauptverbindungsabschnitt von dem jeweiligen Ende der Festradanordnung um wenigstens die Hälfte der axialen Länge des Festrades beabstandet ist.

Wie oben erwähnt, ist es generell möglich, für den Hauptverbindungsabschnitt eine der üblichen Welle-Nabe-Verbindungen zu verwenden.

Von besonderem Vorzug ist es jedoch, wenn der Hauptverbindungsabschnitt durch einen Haupt-Presspassungsabschnitt gebildet ist.

Eine derartige Verbindung mittels zylindrischem Presssitz ist kostengünstig herzustellen. Durch die Maßnahme, den Haupt-Presspassungsabschnitt von wenigstens einem axialen Ende der Festradanordnung zu beabstanden, kann der Haupt-Presspassungsabschnitt zudem mit einem hohen Übermaß realisiert werden, so dass hohe Kräfte übertragbar sind, ohne dass dies zu unzulässigen Verformungen benachbart zu der Festradanordnung führt (an der Welle oder an einem mit der Welle verbundenen Bauteil).

Generell ist es möglich, den Bereich zwischen dem Haupt-Presspassungsabschnitt und der zweiten axialen Seite des Festrades bzw. dem Hohlwellenende als Spielpassung auszuführen, so dass diese Bereiche im Wesentlichen kein Drehmoment übertragen können.

Bevorzugt ist es jedoch insgesamt, wenn die Welle-Nabe-Verbindung wenigstens einen Nebenverbindungsabschnitt aufweist, der in axialer Richtung zwischen dem Hauptverbindungsabschnitt und einem Ende der Festradanordnung ausgebildet ist, wobei der Hauptverbindungsabschnitt eine höhere Drehmomentübertragungsfähigkeit aufweist als der Nebenverbindungsabschnitt.

Bei dieser Ausführungsform kann auch der Nebenverbindungsabschnitt ein Drehmoment übertragen, jedoch ein geringeres Drehmoment als der Hauptverbindungsabschnitt.

Dabei ist es von besonderem Vorteil, wenn der Hauptverbindungsabschnitt durch einen Haupt-Presspassungsabschnitt gebildet ist, wobei der Nebenverbindungsabschnitt durch einen Neben-Presspassungsabschnitt gebildet ist und wobei der Haupt-Presspassungsabschnitt ein größeres Übermaß aufweist als der Neben-Presspassungsabschnitt.

Bei dieser Variante haben sowohl der Haupt- als auch der Neben-Presspassungsabschnitt jeweils ein Übermaß, sind also als Presspassung ausgebildet und können folglich Drehmoment übertragen. Aufgrund der Maßnahme, den Haupt-Presspassungsabschnitt mit einem größeren Übermaß zu realisieren, kann der Haupt-Presspassungsabschnitt hierbei eine höhere Drehmomentübertragungsfähigkeit aufweisen als der Neben-Presspassungsabschnitt.

Ein Übergang zwischen dem Haupt-Presspassungsabschnitt und dem Neben-Presspassungsabschnitt kann dabei stufig ausgebildet sein. Der Übergang kann jedoch auch kontinuierlich ausgebildet sein. In letzterem Fall können unterschiedliche Presspassungsdurchmesser über eine stetige Verbindung ineinander übergehen.

Die unterschiedlichen Übermaße können dabei am Innenumfang der Festradanordnung ausgebildet sein. Von besonderem Vorzug ist es jedoch, wenn die unterschiedlichen Übermaße am Außenumfang eines Abschnittes der Welle ausgebildet sind, auf den die Festradanordnung aufzupressen ist.

In einer insgesamt bevorzugten Ausführungsform ist an der Welle eine Festrad-Verzahnung ausgebildet, wobei die Festradanordnung axial direkt an die Festrad-Verzahnung angrenzt.

Die Festrad-Verzahnung der Welle kann einstückig mit der Welle ausgebildet sein.

Gemäß einer weiteren bevorzugten Ausführungsform ist ein Lagerbauteil, wie eine Lagerbuchse oder ein Nadellager oder dergleichen, axial direkt an der Festradanordnung angrenzend angeordnet.

Die direkt angrenzende Anordnung einer Festrad-Verzahnung und/oder eines Lagerbauteils an der Festradanordnung wird insbesondere auch dadurch ermöglicht, dass der Hauptverbindungsabschnitt axial von den Enden der Festradanordnung beabstandet ist, so dass keine unzulässigen Spannungen durch die Welle-Nabe-Verbindung auf direkt angrenzende Bauteile wie die Festrad-Verzahnung oder das Lagerbauteil ausgeübt werden.

Die Festradanordnung kann insgesamt aus einem Rohling einstückig hergestellt sein, beispielsweise durch spanende Bearbeitungsverfahren.

Gemäß einer bevorzugten Ausführungsform ist die Festradanordnung aus einem ersten Festradabschnitt mit einem ersten axial vorstehenden Hohlwellenteilabschnitt und aus einem zweiten Festradabschnitt mit einem zweiten axial vorstehenden Hohlwellenteilabschnitt hergestellt, wobei der erste und der zweite Hohlwellenteilabschnitt durch eine Umfangsverbindung fest miteinander verbunden sind.

Die Umfangsverbindung kann insbesondere eine stoffschlüssige Verbindung sein, die beispielsweise durch Reifschweißen gebildet sein kann.

In einer weiteren alternativen Ausführungsform ist die Festradanordnung aus einem ersten Festradabschnitt mit einem axial vorstehenden Hohlwellenabschnitt und aus einem Festrad gebildet, das mit einem Außenumfangsabschnitt des Hohlwellenabschnittes über eine Festradverbindung fest verbunden ist. Die Festradverbindung kann beispielsweise eine Schweißverbindung sein.

Generell ist es jedoch auch möglich, einen Hohlwellenabschnitt bereitzustellen, der zwei axial beabstandete Außenumfangsabschnitte aufweist, an die jeweils ein einzelnes Festrad mittels einer solchen Festradverbindung festgelegt ist.

Insgesamt wird mit der vorliegenden Erfindung wenigstens einer der folgenden Vorteile erzielt.

Zum einen ist es innerhalb eines Haupt-Presspassungsabschnittes möglich, ein Pressen mit einer höheren Überdeckung bzw. einem höheren Übermaß zu realisieren, als es radial unter einer Festradaußenverzahnung realisierbar wäre.

Das Übermaß eines Haupt-Presspassungsabschnittes ist vorzugsweise wenigstens 25 %, und insbesondere wenigstens 40 % größer als das Übermaß eines Neben-Presspassungsabschnittes.

Durch den relativ langen Einführdurchmesser des Hohlwellenabschnittes ergibt sich beim Aufpressvorgang eine gute Zentrierung. Bei gegebenen Abmessungen kann die Außenverzahnung des Festrades mehr Drehmoment übertragen bzw. ist höher belastbar.

Durch den Haupt-Presspassungsabschnitt in der axialen Mitte der Festradanordnung kann ein Nadellagersitz direkt an der Festradanordnung angrenzen.

Durch Fertigung bzw. Hartbearbeitung eines Bauteils (Festradanordnung) entsteht eine geringe Breitentoleranz, so dass sich Vorteile hinsichtlich der Toleranzrechnung ergeben.

Bei Realisierung des Hauptverbindungsabschnittes durch einen Haupt-Presspassungsabschnitt ist eine axiale Sicherung nicht nötig, wie sie beim Fügen mittels Steckverzahnungen vorzusehen ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine erste Ausführungsform einer erfindungsgemäßen Wellenanordnung;
- Fig. 2: die Wellenanordnung der Fig. 1 vor der Montage; und
- Fig. 3: eine schematische Längsschnittansicht durch ein Kraftfahrzeuggetriebe mit einer erfindungsgemäßen Wellenanordnung.

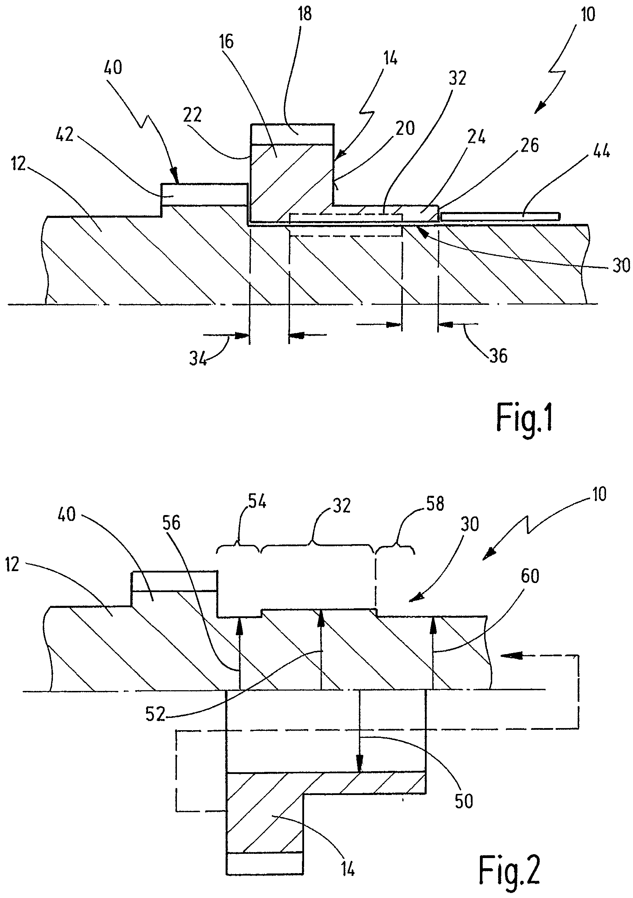

In Fig. 1 ist eine erste Ausführungsform einer Wellenanordnung im Längsschnitt schematisch dargestellt und generell mit 10 bezeichnet.

Die Wellenanordnung 10 weist eine Welle 12 auf, bei der es sich um eine Vollwelle oder um eine Hohlwelle handeln kann. Ferner beinhaltet die Wellenanordnung 10 eine Festradanordnung 14.

Die Festradanordnung 14 weist ein erstes Festrad 16 mit einer ersten Festrad-Verzahnung 18 am Außenumfang auf. Ferner weist das erste Festrad 16 eine erste axiale Seite 20 und eine zweite axiale Seite 22 auf.

Die Festradanordnung 14 beinhaltet ferner einen Hohlwellenabschnitt 24, der sich von der ersten axialen Seite 20 des ersten Festrades 16 in axialer Richtung erstreckt. Die axiale Länge des Hohlwellenabschnittes 24 ist vorzugsweise wenigstens so groß wie die axiale Länge des ersten Festrades 16, und vorzugsweise kleiner als das Vierfache der axialen Länge des Festrades 16. Ein Hohlwellenende des Hohlwellenabschnittes 24, das von dem ersten Festrad 16 beabstandet ist, ist mit 26 bezeichnet.

Die Festradanordnung 14 ist mittels einer Welle-Nabe-Verbindung 30 mit der Welle 12 verbunden. Die Welle-Nabe-Verbindung 30 weist einen Hauptverbindungsabschnitt 32 auf, der vorzugsweise als Haupt-Presspassungsabschnitt ausgebildet ist. Über den Hauptverbindungsabschnitt 32 wird die Festradanordnung 14 sowohl in Umfangsrichtung als auch in axialer Richtung an der Welle 12 festgelegt.

Der Hauptverbindungsabschnitt 32 ist in axialer Richtung von der zweiten axialen Seite 22 des ersten Festrades 16 beabstandet, wie es bei 34 gezeigt ist. Ferner ist der Hauptverbindungsabschnitt 32 in axialer Richtung von dem Hohlwellenende 26 axial beabstandet, wie es bei 36 angedeutet ist.

Die Abstände 34, 36 sind vorzugsweise mindestens halb so groß wie die axiale Länge des Festrades 16. In einer besonders bevorzugten Ausführungsform ist der Hauptverbindungsabschnitt 32 so ausgebildet, dass er nicht unter der Festrad-Verzahnung 18 angeordnet ist, so dass bei der Darstellung der Fig. 1 der erste Abstand 34 mindestens so groß ist wie die axiale Länge des Festrades 16.

Axial direkt benachbart zu dem ersten Festrad 16 ist an der Welle 12 ein zweites Festrad 40 mit einer zweiten Festrad-Verzahnung 42 ausgebildet. Das zweite Festrad 40 ist hierbei einstückig mit der Welle 12 gebildet. Unmittelbar benachbart zu dem Hohlwellenende 26 ist ein Lagerbauteil 44, beispielsweise in Form einer Lagerbuchse oder in Form eines Nadellagers, angeordnet.

Durch die Abstände 34, 36 des Hauptverbindungsabschnittes 32 von der zweiten axialen Seite 22 und/oder von dem Hohlwellenende 26 kann erreicht werden, dass die Welle-Nabe-Verbindung 30 nicht zu unzulässigen Spannungserhöhungen im Bereich der benachbarten Komponenten (das heißt des zweiten Festrades 40 und/oder des Lagerbauteils 44) führt. Demzufolge ist es möglich, die Festradanordnung 14 direkt benachbart zu diesen Komponenten anzuordnen.

Fig. 2 zeigt die Realisierung des Hauptverbindungsabschnittes 32 mittels eines Haupt-Presspassungsabschnittes. In Fig. 2 ist schematisch dargestellt, dass die Festradanordnung 14 einen durchgehend einheitlichen Innenradius 50 aufweist. Die Welle 12 weist im Bereich des Haupt-Presspassungsabschnittes 32 einen Außenradius 52 auf, der mit Übermaß gegenüber dem Innenradius 50 realisiert ist.

In dem Bereich des ersten Abstandes beinhaltet die Welle-Nabe-Verbindung 30 ferner einen ersten Nebenverbindungsabschnitt 54 in Form eines Neben-Presspassungsabschnittes. In diesem Bereich weist die Welle 12 einen Außenradius 56 auf, der ebenfalls mit Übermaß gegenüber dem Innenradius 50 hergestellt ist. In entsprechender Weise weist die Welle-Nabe-Verbindung 30 im Bereich des zweiten Abstandes 36 einen zweiten Nebenverbindungsabschnitt 58 auf, in dem die Welle 12 einen Außenradius 60 aufweist, der vorzugsweise ebenfalls mit Übermaß gegenüber dem Innendurchmesser 50 hergestellt ist.

Das Übermaß des Außenradius 52 des Haupt-Presspassungsabschnittes 32 ist dabei größer als das Übermaß der Außenradien 56, 60 der Neben-Presspassungsabschnitte 54, 58.

In Fig. 2 ist ferner durch einen Pfeil schematisch dargestellt, dass die Festradanordnung 14 in axialer Richtung auf die Welle 12 aufgeschoben und dann im Bereich der Welle-Nabe-Verbindung 30 aufgepresst wird, wobei das zweite Festrad 40 unmittelbar benachbart zu der zweiten axialen Seite 22 angeordnet sein kann, bzw. als Anschlag beim Aufpressen dienen kann.

Nach dem Aufpressen der Festradanordnung 14 auf die Welle 12 können in der gleichen axialen Richtung weitere Komponenten auf die Welle 12 aufgeschoben bzw. aufgepresst werden, beispielsweise das Lagerbauteil 44.

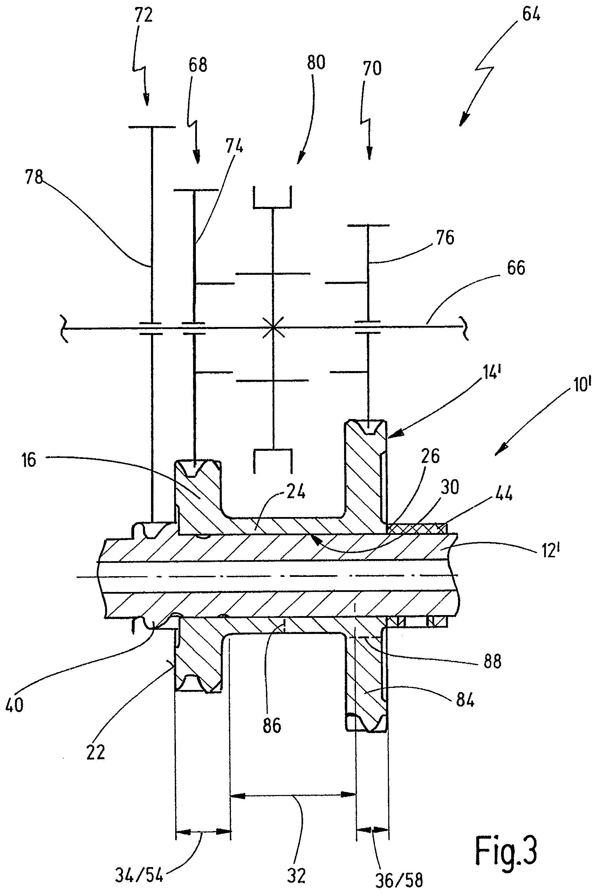

Fig. 3 zeigt in schematischer Form ein Fahrzeuggetriebe 64, das als Vorgelegegetriebe in Stirnradbauweise ausgeführt ist. Das Fahrzeuggetriebe 64 weist eine Wellenanordnung 10' auf, die hinsichtlich Aufbau und Funktionsweise generell der Wellenanordnung 10 der Fig. 1 und 2 entspricht. Gleiche Elemente sind daher durch gleiche Bezugszeichen gekennzeichnet. Im Folgenden werden im Wesentlichen die Unterschiede erläutert.

Das Fahrzeuggetriebe 64 weist eine weitere Welle 66 auf, die parallel versetzt zu der Welle 12' angeordnet ist. Ferner weist das Fahrzeuggetriebe 64 eine Mehrzahl von Radsätzen auf, einschließlich eines Radsatzes 68, der beispielsweise für eine Gangstufe 3 ausgelegt sein kann, eines Radsatzes 70, der beispielsweise für eine Gangstufe 5 ausgebildet sein kann, und eines Radsatzes 72, der beispielsweise für eine Gangstufe 1 ausgebildet sein kann.

Der Radsatz 68 weist ein Losrad 74 auf, das drehbar an der weiteren Welle 66 gelagert ist. In entsprechender Weise weist der Radsatz 70 ein Losrad 76 auf, das drehbar an der weiteren Welle 66 gelagert ist. Schließlich weist der Radsatz 72 ein Losrad 78 auf, das drehbar an der weiteren Welle 66 gelagert ist.

Zwischen den Losrädern 74, 76 ist ein Schaltkupplungspaket 80 an der weiteren Welle 66 angeordnet, mittels dessen eine Neutralstellung eingerichtet werden kann, sowie zwei Schaltstellungen, bei denen entweder das Losrad 74 drehfest mit der weiteren Welle 66 verbunden ist, oder das Losrad 76. Schaltkupplungspakete 80 dieser Art sind allgemein bekannt. Das Schaltkupplungspaket 80 kann beispielsweise Synchron-Sperrkupplungen aufweisen.

Das Losrad 74 des Radsatzes 68 steht in Dreheingriff mit dem ersten Festrad 16. Das Losrad 78 des Radsatzes 72 steht in Dreheingriff mit dem zweiten Festrad 40.

Vorliegend weist die Festradanordnung 14' der Wellenanordnung 10' ein weiteres, drittes Festrad 84 auf, das in Dreheingriff steht mit dem Losrad 76 des Radsatzes 70.

Das dritte Festrad 84 ist am Außenumfang des Hohlwellenabschnittes 24 angeordnet, und zwar benachbart zu dem Hohlwellenende 26. Eine axiale Seite des dritten Festrades 84 ist vorzugsweise axial mit dem Hohlwellenende 26 ausgerichtet.

In Fig. 3 ist zu erkennen, dass die Festradanordnung 14' über eine Welle-Nabe-Verbindung 30 mit der Welle 12' verbunden ist, die ebenfalls einen Hauptverbindungsabschnitt 32 und zwei Nebenverbindungsabschnitte 54, 58 aufweist, Vorliegend ist der Nebenverbindungsabschnitt 54 von der zweiten axialen Seite 22 des ersten Festrades 16 weiter beabstandet als die axiale Länge des ersten Festrades 16. Der Hauptverbindungsabschnitt 32 ist um wenigstens die Hälfte der axialen Länge des dritten Festrades 84 von dem Hohlwellenende 26 beabstandet.

Die Festradanordnung 14' kann einstückig aus einem Rohling hergestellt sein.

Alternativ kann die Festradanordnung 14' gebildet sein aus einem ersten Festradabschnitt mit einem ersten axial vorstehenden Hohlwellenteilabschnitt sowie aus einem zweiten Festradabschnitt mit einem zweiten axial vorstehenden Hohlwellenteilabschnitt, wobei die Hohlwellenteilabschnitte zur Bildung des Hohlwellenabschnittes 24 durch eine Umfangsverbindung fest miteinander verbunden sind, wie es schematisch bei 86 angedeutet ist. Die Umfangsverbindung kann beispielsweise eine Schweißverbindung sein.

Alternativ ist es möglich, die Festradanordnung zu bilden aus einem ersten Festradabschnitt mit einem axial vorstehenden Hohlwellenabschnitt und aus einem weiteren Festrad, das mit einem Außenumfangsabschnitt des Hohlwellenabschnittes über eine Festradverbindung verbunden ist, wie es schematisch bei 88 in Fig. 3 dargestellt ist.

Hieraus versteht sich, dass die Festradanordnung 14 auch gebildet sein kann durch einen Hohlwellenabschnitt, der über zwei Festradverbindungen mit jeweiligen Festrädern verbunden sein kann. Im letzteren Fall können die Rohteile einfacher hergestellt werden.

## Patentansprüche

1. Wellenanordnung (10) für ein Getriebe (64), mit einer Welle (12) und mit einer an der Welle (12) mittels einer Welle-Nabe-Verbindung (30) festgelegten Festradanordnung (14), die ein Festrad (16) und einen Hohlwellenabschnitt (24) aufweist, wobei das Festrad (16) eine erste axiale Seite (20), eine zweite axiale Seite (22) sowie eine Verzahnung (18) aufweist, wobei der Hohlwellenabschnitt (24) die Welle (12) umgibt und sich von der ersten axialen Seite (20) des Festrades (16) erstreckt, wobei der Hohlwellenabschnitt (24) ein von dem Festrad (16) entferntes Hohlwellenende (26) aufweist und wobei die Welle-Nabe-Verbindung (30) einen durch einen Haupt-Presspassungsabschnitt (32) gebildeten Hauptverbindungsabschnitt (32) aufweist, der in axialer Richtung von der zweiten axialen Seite (22) des Festrades (16) beabstandet ist,
**dadurch gekennzeichnet, dass** der Hauptverbindungsabschnitt (32) von dem Hohlwellenende (26) beabstandet ist.

2. Wellenanordnung nach Anspruch 1, **dadurch gekennzeichnet, dass** der Hohlwellenabschnitt (24) ein von dem Festrad (16) entferntes Hohlwellenende (26) aufweist, wobei das Hohlwellenende (26) am Außenumfang mit einem weiteren Festrad (84) fest verbunden ist.

3. Wellenanordnung nach einem der Ansprüche 1 oder 2, **dadurch gekennzeichnet, dass** die Welle-Nabe-Verbindung (30) wenigstens einen Nebenverbindungsabschnitt (54, 58) aufweist, wobei der Hauptverbindungsabschnitt (32) eine höhere Drehmomentübertragungsfähigkeit aufweist als der Nebenverbindungsabschnitt (54, 58).

4. Wellenanordnung nach Anspruch 3, **dadurch gekennzeichnet, dass** der Hauptverbindungsabschnitt (32) durch einen Haupt-Presspassungsabschnitt (32) gebildet ist, wobei der Nebenverbindungsabschnitt (54, 58) durch einen Neben-Presspassungsabschnitt (54, 58) gebildet ist und wobei der Haupt-Presspassungsabschnitt (32) ein größeres Übermaß aufweist als der Neben-Presspassungsabschnitt (54, 58).

5. Wellenanordnung nach einem der Ansprüche 1 - 4, **dadurch gekennzeichnet, dass** an der Welle (12) eine Festrad-Verzahnung (42) ausgebildet ist, wobei die Festradanordnung (14) axial direkt an die Festrad-Verzahnung (42) angrenzt.

6. Wellenanordnung nach einem der Ansprüche 1 - 5, **dadurch gekennzeichnet, dass** ein Lagerbauteil (44) axial direkt an die Festradanordnung (14) angrenzt.

7. Wellenanordnung nach einem der Ansprüche 1 - 6, **dadurch gekennzeichnet, dass** die Festradanordnung (14) aus einem Rohling einstückig hergestellt ist.

8. Wellenanordnung nach einem der Ansprüche 1 - 6, **dadurch gekennzeichnet, dass** die Festradanordnung (14) aus einem ersten Festradabschnitt mit einem ersten axial vorstehenden Hohlwellenteilabschnitt und aus einem zweiten Festradabschnitt mit einem zweiten axial vorstehenden Hohlwellenteilabschnitt hergestellt ist, wobei der erste und der zweite Hohlwellenteilabschnitt durch eine Umfangsverbindung (86) fest miteinander verbunden sind.

9. Wellenanordnung nach einem der Ansprüche 1 - 6, **dadurch gekennzeichnet, dass** die Festradanordnung (14) aus einem ersten Festradabschnitt mit einem axial vorstehenden Hohlwellenabschnitt (24) und aus einem Festrad (16) gebildet ist, das mit einem Außenumfangsabschnitt des Hohlwellenabschnittes (24) über eine Festradverbindung (88) fest verbunden ist.

10. Fahrzeuggetriebe (64) mit einer Welle (12) und wenigstens einem daran festgelegten Festrad (16), das zur Einrichtung einer Gangstufe des Fahrzeuggetriebes (64) mit einem Losrad (74) in Eingriff steht, das an einer weiteren Welle (66) drehbar gelagert ist, wobei die Welle (12) und das Festrad (16) durch eine Wellenanordnung (10) nach einem der Ansprüche 1 bis 9 gebildet sind.

## Claims

1. Shaft arrangement (10) for a transmission (64), having a shaft (12) and having a fixed gear arrangement (14), which is fixed on the shaft (12) by means of a shaft/hub joint (30) and has a fixed gear (16) and a hollow shaft section (24), wherein the fixed gear (16) has a first axial side (20), a second axial side (22) and a tooth system (18), wherein the hollow shaft section (24) surrounds the shaft (12) and extends from the first axial side (20) of the fixed gear (16), wherein the hollow shaft section (24) has a hollow shaft end (26) remote from the fixed gear (16), and wherein the shaft/hub joint (30) has a main joint section (32), which is formed by a main press fit section (32) and which is spaced apart in the axial direction from the second axial side (22) of the fixed gear (16),
**characterized in that**
the main joint section (32) is spaced apart from the hollow shaft end (26).

2. Shaft arrangement according to Claim 1, **characterized in that** the hollow shaft section (24) has a hollow shaft end (26) remote from the fixed gear (16), wherein the hollow shaft end (26) is securely connected at the outer periphery to a further fixed gear (84).

3. Shaft arrangement according to one of Claims 1 or 2, **characterized in that** the shaft/hub joint (30) has at least one secondary joint section (54, 58), wherein the main joint section (32) has a higher torque transmission capacity than the secondary joint section (54, 58).

4. Shaft arrangement according to Claim 3, **characterized in that** the main joint section (32) is formed by a main press fit section (32), wherein the secondary joint section (54, 58) is formed by a secondary press fit section (54, 58), and wherein the main press fit section (32) has a greater negative allowance than the secondary press fit section (54, 58).

5. Shaft arrangement according to one of Claims 1-4, **characterized in that** a fixed gear tooth system (42) is formed on the shaft (12), wherein the fixed gear arrangement (14) directly adjoins the fixed gear tooth system (42) axially.

6. Shaft arrangement according to one of Claims 1-6, **characterized in that** a bearing component (44) directly adjoins the fixed gear arrangement (14) axially.

7. Shaft arrangement according to one of Claims 1-6, **characterized in that** the fixed gear arrangement (14) is produced integrally from a blank.

8. Shaft arrangement according to one of Claims 1-6, **characterized in that** the fixed gear arrangement (14) is produced from a first fixed gear section having a first axially projecting hollow shaft subsection and from a second fixed gear section having a second axially projecting hollow shaft subsection, wherein the first and second hollow shaft subsections are securely connected to one another by a peripheral joint (86).

9. Shaft arrangement according to one of Claims 1-6, **characterized in that** the fixed gear arrangement (14) is formed from a first fixed gear section having an axially projecting hollow shaft section (24) and from a fixed gear (16) which is securely connected to an outer periphery section of the hollow shaft section (24) by means of a fixed gear joint (88).

10. Vehicle transmission (64) having a shaft (12) and having at least one fixed gear (16) fixed thereon, which, to set up a gear stage of the vehicle transmission (64), is in engagement with a free gear (74), which is rotatably mounted on a further shaft (66), wherein the shaft (12) and the fixed gear (16) are formed by a shaft arrangement (10) according to one of Claims 1 to 9.

## Revendications

1. Ensemble d'arbre (10) pour transmission (64), présentant un arbre (12) et un ensemble (14) de roue fixe qui présente une roue fixe (16) et une section (24) d'arbre creux et qui est fixé sur l'arbre (12) au moyen d'une liaison (30) arbre-moyeu,
la roue fixe (16) présentant un premier côté axial (20), un deuxième côté axial (22) ainsi qu'une denture (18),
la section (24) d'arbre creux entourant l'arbre (12) et s'étendant depuis le premier côté axial (20) de la roue fixe (16),
la section (24) d'arbre creux présentant une extrémité (26) d'arbre creux située à distance de la roue fixe (16),
la liaison (30) arbre-moyeu présentant une section principale de liaison (32) formée par une liaison principale (32) d'adaptation en compression maintenue à distance dans la direction axiale du deuxième côté axial (22) de la roue fixe (16),
**caractérisé en ce que**
la section principale de liaison (32) est située à distance de l'extrémité (26) de l'arbre creux.

2. Ensemble d'arbre selon la revendication 1, **caractérisé en ce que** la section (24) d'arbre creux présente une extrémité (26) d'arbre creux située à distance de la roue fixe (16) et **en ce que** l'extrémité (26) de l'arbre creux est reliée solidairement à une roue fixe (84) à sa périphérie extérieure.

3. Ensemble d'arbre selon l'une des revendications 1 ou 2, **caractérisé en ce que** la liaison (30) arbre-moyeu présente au moins une section secondaire de liaison (54, 58), la section principale de liaison (32) présentant une capacité plus élevée de transfert de couple de rotation que la section secondaire de liaison (54, 58).

4. Ensemble d'arbre selon la revendication 3, **caractérisé en ce que** la section principale de liaison (32) est formée par une section principale (32) d'adaptation en compression, la section secondaire de liaison (54, 58) étant formée par une section secondaire (54, 58) d'adaptation en compression, la section principale (32) d'adaptation en compression présentant des dimensions plus grandes que la section secondaire (54, 58) d'adaptation en compression.

5. Ensemble d'arbre selon l'une des revendications 1 à 4, **caractérisé en ce qu'**une denture (42) de roue fixe est formée sur l'arbre (12), l'ensemble (14) de roue fixe étant adjacent axialement directement à la denture (42) de roue fixe.

6. Ensemble d'arbre selon l'une des revendications 1 à 5, **caractérisé en ce qu'**un composant de palier (44) est directement adjacent dans la direction axiale à l'ensemble (14) de roue fixe.

7. Ensemble d'arbre selon l'une des revendications 1 à 6, **caractérisé en ce que** l'ensemble (14) de roue fixe est réalisé d'un seul tenant à partir d'une ébauche.

8. Ensemble d'arbre selon l'une des revendications 1 à 6, **caractérisé en ce que** l'ensemble (14) de roue fixe est constitué d'une première section de roue fixe présentant une première section partielle d'arbre creux en débord axial et d'une deuxième section de roue fixe présentant une deuxième section partielle d'arbre creux en débord axial, la première et la deuxième section partielle d'arbre creux étant reliées solidairement l'une à l'autre par une liaison périphérique (86).

9. Ensemble d'arbre selon l'une des revendications 1 à 6, **caractérisé en ce que** l'ensemble (14) de roue fixe est formé d'une première section de roue fixe dotée d'une section (24) d'arbre creux en débord axial et d'une roue fixe (16) reliée solidairement à une section périphérique extérieure de la section (24) d'arbre creux par l'intermédiaire d'une liaison (88) de roue fixe.

10. Transmission (64) pour véhicule présentant un arbre (12) sur lequel est fixée au moins une roue fixe (16) qui engage une roue folle (74) pour établir un rapport de la transmission (64) du véhicule et qui est monté à rotation sur un autre arbre (66), l'arbre (12) et la roue fixe (16) étant formés par un ensemble (10) d'arbre selon l'une des revendications 1 à 9.
